# EUROPEAN PATENT SPECIFICATION

(11) **EP 3 699 033 B1**
(45) Date of publication and mention of the grant of the patent: **21.04.2021**
(21) Application number: 20382076.6
(22) Date of filing: 05.02.2020
(51) Int. Cl.: B60R 13/10, B32B 38/00

(54) **METHOD FOR FORMING HYBRID LICENSE PLATES AND DIGITAL PRINTING MACHINE FOR CARRYING OUT SAID METHOD**
VERFAHREN ZUR FORMUNG VON HYBRIDEN KENNZEICHENSCHILDERN UND DIGITALE DRUCKMASCHINE ZUR DURCHFÜHRUNG DES BESAGTEN VERFAHRENS
PROCÉDÉ DE FORMATION DE PLAQUES D'IMMATRICULATION HYBRIDES ET IMPRIMANTE NUMÉRIQUE POUR EFFECTUER LEDIT PROCÉDÉ

(30) Priority: 25.02.2019 ES 201930165
(43) Date of publication of application: 26.08.2020
(73) Proprietor: INDUSTRIAS SAMAR'T, S.A., 17600 Figueres (Girona) (ES)
(72) Inventor: SÁNCHEZ CASADEVALL, Enrique, 17600 FIGUERES (GIRONA) (ES)
(74) Representative: Munoz Garcia, Antonio

(56) References cited:
- EP-A1- 0 613 804
- EP-A2- 0 223 565
- GB-A- 2 380 308
- US-B1- 6 790 578

## Description

### OBJECT OF THE INVENTION

As expressed in the title of the present specification, the invention relates to a method for forming hybrid license plates and to a digital printing machine for carrying out said method, providing certain advantages and features described in detail below to the intended function, representing an improvement in the current state of the art.

More specifically, the object of the invention focuses on a method for forming license plates, i.e., identification plates of the type incorporated in vehicles for transport and having common identification symbols and unique characters which, formed from a support base made of metal or of a synthetic material with the surface of its exposed face provided with a sheet of reflective material and a cover made of a protective transparent film for protecting the mentioned identification symbols and characters incorporated between said reflective sheet and said protective film, is distinguished as it contemplates a printing phase for printing the reflective sheet in a digital printer which at the same time automatically incorporates the protective film on same, facilitating its subsequent application on the support base, and for which purpose a printing machine has been designed, provided with means for carrying out said phase of the method for the automatic incorporation of the protective film, which is also part of the object of the present invention.

### FIELD OF APPLICATION OF THE INVENTION

The field of application of the present invention is comprised in the sector of the industry dedicated to the manufacture and formation of license plates, particularly focusing on the field of hybrid plates, i.e., formed by a support base made of metal and sheets on which the identification signs are digitally printed.

### BACKGROUND OF THE INVENTION

As is known, one of the methods for the manufacture and formation of license plates used at present and replacing the plates formed by deep drawing the characters, is one that combines a rigid base with digitally printed sheets that are adhered to the surface of the base, for which purpose the use of plate laminating machines is contemplated, which machines generally have rollers pressing said base and said sheets between one another so as to fix the adhesive provided between them and correctly bond them together.

The problem is that when there is more than one sheet to be bonded on the base, which is what usually happens now, since there is usually at least a sheet of reflective material which must be included in the plate in most countries, and an upper protective sheet preventing said reflective sheet and the characters or symbols from deteriorating with friction, lamination of the assembly becomes more complex and the task of shaping the plates becomes more complex and tedious, particularly taking into account that usually vehicle shops or distributors take care of producing the corresponding plate with the identification numbers that will be unique and different for each vehicle, once said vehicle has been sold and the deed obtained.

Namely, the known method usually involves the following steps:
- first, printing the sheets in a digital printer, generally, on one hand, the reflective sheet with the symbols common to many plates, and on the other, the transparent sheet with the particular characters of the plate in question, and
- second, bonding, in the laminating machine, the two printed sheets with the support base, which can either be carried out in two phases, i.e., first bonding the reflective sheet to the base in a first lamination operation, and subsequently bonding the transparent sheet with the characters on the base with the already adhered reflective sheet, or doing this in one and the same operation but with a specific laminating machine which allows correctly centering the three elements at the same time so that they can pass through the rollers without any problems, making the process more expensive and requiring higher skills.

The objective of the present invention is to provide a method and a printing machine which allows carrying out the automatic bonding of the reflective sheet and the transparent sheet in the digital printing phase for shaping license plates of this type in a more rapid, practical and simple manner, preventing at least some of the steps taking place in the conventional method, so that any operator may carry out said method without needing to possess any specific knowledge or skills, and with any conventional laminating machine.

As a reference to the state of the art, it should be mentioned that as the closest document, document EP0613804A1, relating to a "Sign, preferably registration sign for vehicles, and method for the manufacture thereof," is known. However, unlike the method and machine of the present invention, this document describes the manufacture of said sign in a plant comprising different stations for each of the phases of manufacturing the sign, such that in one station a web is printed with an ionographic printer; in another station the printed web is bonded to a transparent plastic web; in another station both layers are pressed against each other; in another station a protective front plate is incorporated; in another station a bottom plate is incorporated; and in another station a frame is incorporated around the perimeter by moulding. It is therefore evident that it does not solve the described problems, as it continues to be a process that comprises printing and bonding the layers together in different phases. Additionally, nor does it disclose a printing machine which, in one and the same step, prints the characters and bonds the transparent upper layer to the intermediate layer with the characters by laminating.

### DISCLOSURE OF THE INVENTION

The method for forming hybrid license plates and the digital printing machine for carrying out said method proposed by the invention allow satisfactorily fulfilling the aforementioned objectives, with the characterizing details that distinguish them being suitably described in the claims at the end attached to the present description.

More specifically, the object of the invention focuses on one hand on a method for forming license plates, namely and specifically for the formation license plates having common identification symbols and unique characters and formed from at least the following superimposed layers:
- a rigid lower layer, formed by a support base made of metal, preferably aluminum, or of a synthetic material;
- an intermediate layer, consisting of a thin flexible sheet of reflective material with the identification symbols and characters printed thereon, which is adhered on the surface of the upper face or exposed face of the support base, which may or may not be smaller in dimension than the latter, such that the base projects around the perimeter; and
- an upper layer, incorporated on the intermediate layer, and with the same dimension as the latter, consisting of a transparent flexible film acting as a protective cover for protecting the upper surface of the intermediate layer to which it is bonded by means of adhesive.

Said method, in replacing the phases known contemplating the use of at least two different machines for printing and bonding the flexible layers together, such as:
- a prior printing phase for printing the identification symbols and characters on the intermediate layer constituting the reflective sheet by means of using a digital printing machine,
- and a later incorporation phase for incorporating the upper layer of protective transparent film on said reflective intermediate layer, and to the rigid base at the same time, by means of using a laminating machine,
is distinguished as it combines both phases in a single phase by means of using the same machine to carry out the printing phase for printing the identification symbols and characters on the reflective intermediate layer, and the incorporation phase for incorporating the upper layer of transparent film on said reflective intermediate layer.

Therefore, the method according to the invention is distinguished as it comprises a printing phase for printing the reflective sheet in a digital printing machine which, at the same time, automatically incorporates the protective film on said sheet once printed, facilitating the later phase of applying both already bonded layers, that is, the reflective intermediate layer and the transparent upper layer, on the support base made of metal or synthetic material with a laminating machine.

In turn, the digital printing machine which allows carrying out said phase of the method is distinguished as it comprises, at the outlet of the printing unit thereof, where the reflective sheet is ejected once printed, automatic application means for applying the protective film.

More specifically, said means contemplate at least a pair of laminating rollers which, located under a support for including a roll of pre-cut film, are linked to an automatic operating mechanism associated with a detector which, in turn connected to the electronics of the printer, activates said operating mechanism when it detects that the printed reflective sheet has exited for the rollers to move and laminate a pre-cut portion of transparent film coming from the roll together with said printed reflective sheet.

It should be pointed out that, as mentioned, the bonding between said reflective sheet and the transparent film is carried out by means of an adhesive which is preferably impregnated on the lower surface of the pre-cut portion of transparent film, for which purpose the latter, before entering between the rollers, is released from the protector paper it incorporates by means provided for that purpose in the machine.

This, however, does not represent a limitation because, alternatively, the reflective sheet could be the one that incorporates on its upper surface the adhesive which bonds it to the transparent film.

### DESCRIPTION OF THE DRAWINGS

To complement the description being made and for the purpose of helping to better understand the features of the invention, a set of drawings is attached to the present specification as an integral part thereof, in which the following is depicted in an illustrative and non-limiting manner:
Figure 1 shows an exploded schematic front elevational view of an example of the license plate intended to be formed by the method and the machine object of the invention, where the different layers it comprises and the arrangement thereof can be seen.
Figure 2 shows a schematic perspective view of a portion of the exploded view of the plate shown in Figure 1, where the configuration and arrangement of the layers thereof and the elements comprised by each of them can be seen in greater detail.
Figure 3 shows a schematic perspective view of an example of the machine according to the invention for carrying out the phase of the method for the automatic incorporation of the protective film.

### PREFERRED EMBODIMENT OF THE INVENTION

In view of the mentioned figures and according to the numbering used, there can be observed in said figures a non-limiting embodiment of the license plate to be shaped and of the digital printing machine for carrying out the method object of the invention, which comprises the parts and elements indicated and described in detail below.

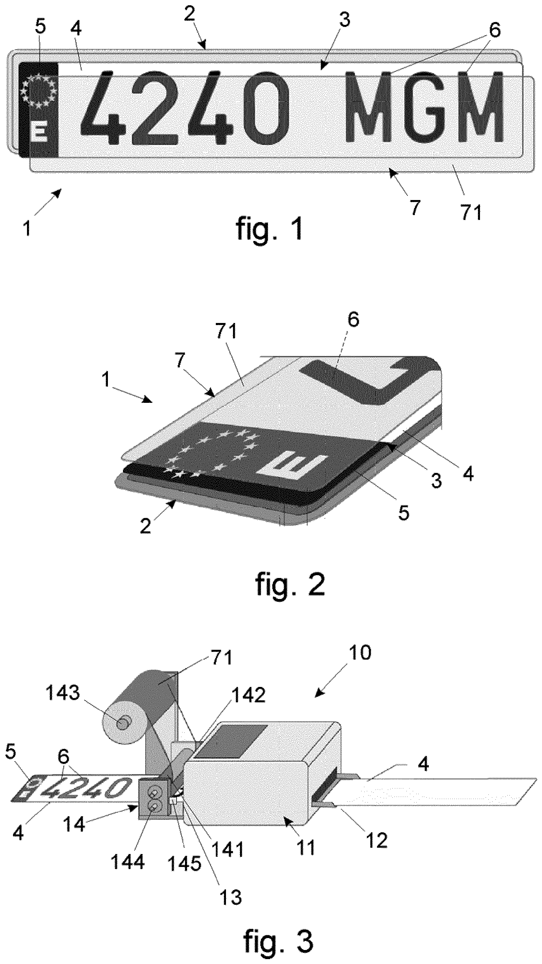

Thus, as can be seen in Figures 1 and 2, the plate (1) to be shaped by means of the method of the invention is made up of several superimposed layers, which layers are digitally printed, at least a of such layers being printed in a prior printing phase, and are bonded together with adhesive placed between them by means of at least a later lamination phase, comprising at least:
- a rigid lower layer (2), formed by a support base made of metal, preferably aluminum, or of a synthetic material, in the form of a rectangular plate;
- an intermediate layer (3), made up of a reflective sheet (4) with symbols (5) and characters (6) printed thereon, which may or may not be smaller in dimension than the lower layer (2), such that the latter projects along around the perimeter; and
- an upper layer (7), having the same dimension as the intermediate layer (3), consisting of a protective transparent film (71).

The method is therefore distinguished in that in the same digital printing phase for digitally printing the symbols (5) and characters (6) making up the intermediate layer (3) on said reflective sheet (4) with one and the same digital printing machine (10), the protective transparent film (71) of the upper layer (7) is automatically incorporated on said sheet (4) once printed, laminating both layers (3, 7) together, with the lamination of said two bonded layers (3, 7) with the lower layer (2) constituting the support base made of metal being performed in a later phase.

As can be seen in Figure 3, the digital printing machine (10) which allows carrying out said method, at least in the printing phase for printing the intermediate layer (3) and the automatic bonding of the latter with the upper layer (7), comprises a conventional digital printing unit (11) with an inlet area (12) for inserting an intact reflective sheet (4), i.e., one that does not incorporate any printed symbols (5) or characters (6), and an outlet area (13) for the printed reflective sheet (4) with symbols (5) and characters (6), where it is distinguished as it has, next to said outlet area (13) for the printed reflective sheet (4), automatic application and laminating means (14) for applying and laminating a protective transparent film (71), constituting the upper layer (7) of the plate (1), on said printed reflective sheet (4) with symbols (5) and characters (6), and constituting the intermediate layer (3) of the plate (1).

Preferably, said automatic application and laminating means (14) comprise at least a pair of laminating rollers (141) which, incorporated between respective anchors (142) and located under a roller support (143), for including a roll of pre-cut transparent film (71), are linked to an automatic operating mechanism (144) associated with a detector (145) which, connected in turn to the electronics of the printing unit (11), activates said operating mechanism (144) when it detects that the printed reflective sheet (4) has exited through the outlet area (13) for the rollers (141) to move and laminate a pre-cut portion of transparent film (71) together with said printed reflective sheet (4).

Having sufficiently described the nature of the present invention as well as the way of putting it into practice, it is not considered necessary to further describe the invention so that a person skilled in the art can comprehend the scope thereof and the advantages derived from it, stating that within its essential nature, the present invention could be carried out to practice in other embodiments differing in detail from that indicated by way of example, and such embodiments would also be granted the protection that is sought provided that the fundamental principle thereof is not altered, changed or modified.

## Claims

1. A method for forming hybrid license plates, namely and specifically, for forming plates made up of several superimposed layers, which consist of at least: a rigid lower layer (2), formed by a support base made of metal, for example aluminum, or of a synthetic material, in the form of a rectangular plate; an intermediate layer (3), made up of a reflective sheet (4) with symbols (5) and characters (6) printed thereon, which may or may not be smaller in dimension than the lower layer (2), such that the latter projects along around the perimeter; and an upper layer (7), having the same dimension as the intermediate layer (3), consisting of a protective transparent film (71), and said method comprising at least a prior phase in which the symbols (5) and characters (6) are digitally printed on at least the reflective sheet (4) of the intermediate layer (3), and two subsequent lamination phases in which all the layers (2, 3 and 7) are respectively bonded togeher by means of an adhesive placed between them, the method being **characterized in that** in the same digital printing phase for digitally printing the symbols (5) and characters (6) making up the intermediate layer (3) on said reflective sheet (4) with one and the same digital printing machine (10), the protective transparent film (71) of the upper layer (7) is automatically incorporated on said sheet (4) once printed, laminating both layers (3, 7) together, the lamination of said two bonded layers (3, 7) with the lower layer (2) constituting the support base made of metal or of synthetic material being performed in a later phase.

2. A digital printing machine for carrying out the method of claim 1, namely in the printing phase for printing the intermediate layer (3) and the automatic bonding of the latter with the upper layer (7), comprising a digital printing unit (11) with an inlet area (12) for inserting an intact reflective sheet (4) and an outlet area (13) for the printed reflective sheet (4), **characterized in that** it has, next to said outlet area (13) for the printed reflective sheet (4), with automatic application and laminating means (14) for applying and laminating a protective transparent film (71) on said printed reflective sheet (4).

3. The digital printing machine according to claim 2, wherein said automatic application and laminating means (14) comprise at least a pair of laminating rollers (141), which are arranged incorporated between respective anchors (142) and located under a roller support (143), suitable for including a roll of pre-cut transparent film (71), such rollers (141) being linked to an automatic operating mechanism (144) thereof associated with a detector (145) which is in turn connected to the electronics of the printing unit (11), such that when it detects that the printed reflective sheet (4) has exited through the outlet area (13), said operating mechanism (144) is activated for the rollers (141) to move and laminate a pre-cut portion of transparent film (71) together with said printed reflective sheet (4).

## Patentansprüche

1. Verfahren zur Formung von hybriden Kennzeichenschildern, nämlich und spezifisch, zur Formung von Schildern zusammengesetzt aus mehreren überlagerten Schichten, welche mindestens aus Folgendem bestehen: einer starren unteren Schicht (2), gebildet aus einer metallischen Stützbasis, zum Beispiel aus Aluminium, oder aus synthetischem Material, in Form einer rechteckigen Platte; einer Zwischenschicht (3), zusammengesetzt aus einer reflektierenden Folie (4) mit darauf gedruckten Symbolen (5) und Zeichen (6), wobei diese eine kleinere Abmessung als die untere Schicht (2) aufweisen kann oder nicht, sodass diese umfangsmäßig hervorsteht; und einer oberen Schicht (7), mit der gleichen Abmessung wie die Zwischenschicht (3), bestehend aus einem transparenten Schutzfilm (71), und wobei das besagte Verfahren mindestens eine Vorstufe, in welcher mindestens die reflektierende Folie (4) der Zwischenschicht (3) mit den Symbolen (5) und Zeichen (6) digital gedruckt wird, und zwei nachträgliche Kaschierstufen, in welchen die Schichten (2, 3 und 7) jeweils miteinander mittels eines dazwischen gelegten Klebers verbunden werden, umfasst, **dadurch gekennzeichnet, dass** in der gleichen digitalen Druckstufe der besagten reflektierenden Folie (4) mit den Symbolen (5) und Zeichen (6), welche die Zwischenschicht (3) bildet, und mit einer gleichen digitalen Druckmaschine (10), der transparente Schutzfilm (71) der oberen Schicht (7) auf der besagten Folie (4), wenn sie gedruckt ist, automatisch eingefügt wird, wobei beide Schichten (3, 7) miteinander kaschiert werden, wobei in einer nachträglichen Stufe die Kaschierung der besagten zwei Schichten (3, 7), mit der unteren Schicht (2) verbunden, welche die metallische Stützbasis oder Stützbasis aus synthetischem Material bildet, durchgeführt wird.

2. Digital Druckmaschine zur Durchführung des Verfahrens nach Anspruch 1, nämlich in dessen Druckstufe der Zwischenschicht (3) und automatischen Verbindung derselben mit der oberen Schicht (7), und welche, eine digitale Druckeinheit (11) mit einem Einlassbereich (12) für das Einschieben einer unberührten reflektierenden Folie (4) und einem Auslassbereich (13) der bereits gedruckten reflektierenden Folie (4) umfassend, **dadurch gekennzeichnet ist, dass** sie, neben dem besagten Auslassbereich (13) der bereits gedruckten reflektierenden Folie (4), mit Mitteln zur automatischen Aufbringung und Kaschierung (14) eines transparenten Schutzfilmes (71) auf der besagten bereits gedruckten reflektierenden Folie (4) versehen ist.

3. Digital Druckmaschine nach Anspruch 2, wobei die besagten Mittel zur automatischen Aufbringung und Kaschierung (14) mindestens ein Paar Kaschierwalzen (141) umfassen, welche zwischen jeweiligen Verankerungen (142) eingefügt angeordnet sind und sich unter einer Walzenstütze (143) befinden, welche für das Einschließen einer Rolle aus vorgeschnittenem transparentem Film (71) geeignet ist, wobei die besagten Walzen (141) mit einem automatischen Betätigungsmechanismus (144) derselben verknüpft ist, welcher mit einem Detektor (145) assoziiert ist, welcher wiederum an die Elektronik der Druckeinheit (11) angeschlossen ist, sodass, wenn er den Auslass der gedruckten reflektierenden Folie (4) durch den Auslassbereich (13) detektiert, der besagte Betätigungsmechanismus (144) aktiviert wird, damit die Walzen (141) einen vorgeschnittenen Teil aus transparentem Film (71) zusammen mit der besagten gedruckten reflektierenden Folie (4) verschieben und kaschieren.

## Revendications

1. Procédé pour la formation de plaques d'immatriculation hybrides, concrètement et spécifiquement, pour la formation de plaques composées de plusieurs couches superposées, lesquelles consistent, au moins, en : une couche inférieure (2) rigide, constituée par une base de support métallique, par exemple d'aluminium ou de matière synthétique, en forme de plaque rectangulaire ; une couche intermédiaire (3), composée par une feuille réfléchissante (4) avec des symboles (5) et des caractères (6) imprimés sur celle-ci, pouvant être ou non de moindre dimension que la couche inférieure (2), de manière que celle-ci dépasse sur tout son périmètre ; et une couche supérieure (7), de la même taille que la couche intermédiaire (3), consistant en un film transparent (71) de protection, et ce procédé comprenant au moins une phase préalable dans laquelle, au moins, la feuille réfléchissante (4) de la couche intermédiaire (3) est imprimée numériquement avec les symboles (5) et les caractères (6), et deux phases de laminage postérieures dans lesquelles les couches (2, 3 et 7) sont unies respectivement entre elles au moyen d'un adhésif interposé entre elles, **caractérisé par le fait que**, dans la même phase d'impression numérique de ladite feuille réfléchissante (4) avec les symboles (5) et les caractères (6) qui compose la couche intermédiaire (3) et avec une même machine (10) d'impression numérique, le film transparent (71) protecteur de la couche supérieure (7) est automatiquement incorporé sur ladite feuille (4) une fois imprimée, laminant les deux couches (3, 7) entre elles, la lamination desdites deux couches (3, 7) unies avec la couche inférieure (2) qui constitue la base de support métallique ou de matériau synthétique étant réalisée dans une phase postérieure.

2. Machine d'impression numérique pour mettre en oeuvre le procédé selon la revendication 1, concrètement dans sa phase d'impression de la couche intermédiaire (3) et d'union automatique de celle-ci avec la couche supérieure (7), et qui, comprenant une unité d'impression (11) numérique avec une zone d'entrée (12) pour l'insertion d'une feuille réfléchissante (4) vierge et une zone de sortie (13) de la feuille réfléchissante (4) déjà imprimée, est **caractérisée par** le fait de disposer, à côté de ladite zone de sortie (13) de la feuille réfléchissante (4) déjà imprimée, de moyens d'application automatique et de laminage (14) d'un film transparent (71) de protection sur ladite feuille réfléchissante (4) déjà imprimée.

3. Machine d'impression numérique, selon la revendication 2, ou lesdits moyens d'application automatique et de laminage (14) comprennent au moins une paire de rouleaux (141) laminateurs qui sont disposés incorporés entre des ancrages (142) respectifs et situés sous un support (143) de rouleau, apte pour l'inclusion d'un rouleau de film transparent (71) précoupé, ces rouleaux (141) étant reliés à un mécanisme (144) d'actionnement automatique de ceux-ci associé à un détecteur (145) connecté, à son tour, à l'électronique de l'unité d'impression (11), de telle manière que lorsqu'il détecte la sortie de la feuille réfléchissante (4) imprimée dans la zone de sortie (13), ledit mécanisme (144) d'actionnement est activé pour que les rouleaux (141) déplacent et laminent une portion précoupée de film transparent (71) avec ladite feuille réfléchissante(4) imprimée.
